# EUROPÄISCHE PATENTANMELDUNG

(11) **EP 4 717 087 A1**
(43) Veröffentlichungstag der Anmeldung: **01.04.2026**
(21) Anmeldenummer: 25204532.3
(22) Anmeldetag: 25.09.2025
(51) Int. Cl.: A01N 25/34, A01P 1/00

(54) **VORRICHTUNG MIT EINER OBERFLÄCHE UND EINEM ANTIMIKROBIELLEN MITTEL ZUR HEMMUNG MIKROBIELLEN WACHSTUMS AUF DER OBERFLÄCHE**

(30) Priorität: 27.09.2024 DE 102024128075
(71) Anmelder: Deutsches Zentrum für Luft- und Raumfahrt e.V., 53227 Bonn (DE)
(72) Erfinder: Geier, Sebastian, 38108 Braunschweig (DE)
(74) Vertreter: REHBERG HÜPPE + PARTNER

(57) **Zusammenfassung**

Die Erfindung betrifft eine Vorrichtung (1) mit einer Oberfläche (2) und einem antimikrobiellen Mittel (3) zur Hemmung eines mikrobiellen Wachstums auf der Oberfläche (2), wobei das antimikrobielle Mittel (3) einen Kunststoff (5) aufweist, in den ein antimikrobieller Bestandteil (4) eingebettet ist, wobei der antimikrobielle Bestandteil (4) elektrisch leitfähig ist und an der Oberfläche (2) zumindest teilweise nach außen freiliegt. Um die antimikrobielle Wirkung zu erhöhen, wird vorgeschlagen, dass der antimikrobielle Bestandteil (4) eine elektrische Leitfähigkeit des antimikrobiellen Mittels (3) bewirkt, wobei die Vorrichtung (1) elektrische Anschlüsse (7) aufweist, die konfiguriert sind, um einen elektrischen Strom zur Erwärmung der Oberfläche (2) durch das antimikrobielle Mittel (3) zu leiten.

## Beschreibung

### TECHNISCHES GEBIET DER ERFINDUNG

Die Erfindung betrifft eine Vorrichtung mit einer Oberfläche und einem antimikrobiellen Mittel zur Hemmung eines mikrobiellen Wachstums auf der Oberfläche, wobei das antimikrobielle Mittel einen Kunststoff aufweist, in den ein antimikrobieller Bestandteil eingebettet ist, wobei der antimikrobielle Bestandteil elektrisch leitfähig ist und an der Oberfläche zumindest teilweise nach außen freiliegt.

Daneben betrifft die Erfindung ein Verfahren zur Hemmung eines mikrobiellen Wachstums auf einer Oberfläche mit Hilfe eines antimikrobiellen Mittels, welches einen Kunststoff aufweist, in den ein antimikrobieller Bestandteil eingebettet ist, wobei der antimikrobielle Bestandteil elektrisch leitfähig ist und an der Oberfläche zumindest teilweise nach außen freiliegt.

Oberflächen der genannten Art sind beispielsweise Oberflächen von Gegenständen, nämlich zu einer Umgebung hin freiliegende Flächen oder Schichten von Gegenständen. Des Weiteren kann eine Oberfläche eine separate, insbesondere nachträglich auf einen Körper aufgetragene Schicht, insbesondere eine Beschichtung sein. Das antimikrobielle Mittel der Oberfläche dient dazu, die Oberfläche von Keimen zu befreien und/oder ein Wachstum oder Vermehren der Keime zu verhindern. Das antimikrobielle Mittel kann das originäre Material der Oberfläche sein oder nachträglich auf die Oberfläche aufgebracht sein, z. B. durch Aufsprühen oder Bestreichen. Das antimikrobielle Mittel dient der Unterbrechung von Infektionsketten infolge von Schmierinfektion über Oberflächenfilme, insbesondere dort, wo eine hohe Keimbelastung vorliegt und/oder eine Vielzahl von Menschen aufeinandertreffen. Zum Beispiel ist dies der Fall in öffentlichen Verkehrsmitteln, Flugzeugen, öffentlichen Sanitäreinrichtungen, Schwimmbädern oder auch in privaten Umgebungen wie Badezimmern und Küchen.

### STAND DER TECHNIK

Die Patentschrift US 6 248 342 B1 offenbart ein antimikrobielles Laminat für Arbeitsplatten, Wände oder Geschirr, in dessen Oberfläche eine Zusammensetzung mit einem anorganischen antibiotischen Metall integriert ist. Das Metall kann Silber, Kupfer oder Zink sein, auch in Form von beispielsweise Salzen. Die Zusammensetzung weist einen Kunststoff wie u. a. Melaminharz, PVC oder PU auf, in welchen das Metall eingebettet ist. Bei der Herstellung wird die Zusammensetzung, z. B. in Form von Puder, in dem Kunststoff dispergiert. Hieraus können dann dekorative Laminate, Fußböden, Geschirr, Oberflächen von Arbeitsplatten u. dgl. gebildet werden. Die antimikrobiellen Bestandteile der Zusammensetzung sind in antimikrobiell wirksamem Ausmaß auch an der Oberfläche des Körpers vertreten und weisen somit einen Kontakt mit der Umgebung auf, um dort ihre antimikrobielle Wirkung zu entfalten.

Die WO 2003/009827 A1 offenbart ein antimikrobielles Melaminharz mit einer Melaminverbindung und zumindest einem antimikrobiellen Mittel in einer Dispersion, wobei das antimikrobielle Mittel im Wesentlichen inert gegenüber dem Melaminharz ist und innerhalb des Melaminharzes in einer Menge vorhanden ist, die wirksam ist, um antimikrobielle Eigenschaften zu liefern. Das antimikrobielle Mittel kann beispielsweise Kupfer, das Zeolithe enthält, Kupfer, das amorphes Glaspulver enthält, Zink-Zeolithe oder Zink, das amorphes Glaspulver enthält, aufweisen.

Die vorstehenden antimikrobiellen Oberflächen sind Bestandteile von insbesondere dekorativen Laminaten, welche antimikrobielle Charakteristika aufweisen sollen. Diese haben sich in der Praxis zwar für beispielsweise haushaltsübliche Anwendungen bewährt, sind jedoch weniger geeignet für Umgebungen mit hoher Keimbelastung, insbesondere, da deren antimikrobielle Wirkung gering ist.

### AUFGABE DER ERFINDUNG

Der Erfindung liegt die Aufgabe zugrunde, Oberflächen, insbesondere in Umgebungen mit großem Publikumsverkehr, wirksam von Keimen zu befreien bzw. deren Wachstum zu hemmen. Insbesondere soll die antimikrobielle Wirkung lange vorhalten und ggf. erneuerbar sein.

### LÖSUNG

Die Aufgabe der Erfindung wird erfindungsgemäß mit den Merkmalen der unabhängigen Patentansprüche gelöst. Bevorzugte erfindungsgemäße Ausgestaltungen sind den abhängigen Patentansprüchen zu entnehmen.

### BESCHREIBUNG DER ERFINDUNG

Die Erfindung betrifft eine Vorrichtung mit einer Oberfläche und einem antimikrobiellen Mittel zur Hemmung eines mikrobiellen Wachstums auf der Oberfläche, wobei das antimikrobielle Mittel einen Kunststoff aufweist, in den ein antimikrobieller Bestandteil eingebettet ist, wobei der antimikrobielle Bestandteil elektrisch leitfähig ist und an der Oberfläche zumindest teilweise nach außen freiliegt. Der antimikrobielle Bestandteil bewirkt eine elektrische Leitfähigkeit des antimikrobiellen Mittels. Zudem weist die Vorrichtung elektrische Anschlüsse auf, die konfiguriert sind, um einen elektrischen Strom zur Erwärmung der Oberfläche durch das antimikrobielle Mittel zu leiten.

Insbesondere bewirkt eine bestimmte Menge des antimikrobiellen Bestandteils innerhalb des Materialgefüges eine elektrische Leitfähigkeit der Oberfläche. Die elektrischen Anschlüsse sind dabei ausgebildet, den elektrischen Strom durch das antimikrobielle und aufgrund des antimikrobiellen Bestandteils elektrisch leitfähige Mittel zu leiten.

Insbesondere weist das antimikrobielle Mittel elektrische Anschlüsse zur elektrischen Kopplung mit einer elektrischen Spannungsquelle auf. Die elektrischen Anschlüsse umfassen zwei oder mehr Anschlüsse. Diese können beispielsweise Teilbereiche oder Endbereiche eines metallischen oder leitfähigen Netzes oder Gewebes der antimikrobiellen Bestandteile sein, welche an der Oberfläche des Einbettungsmaterials freiliegen und somit von außen kontaktierbar sind. Alternativ können die elektrischen Anschlüsse als separat ausgebildete Anschlüsse mit dem antimikrobiellen Mittel verbunden sein. Beispielsweise kann der antimikrobielle Bestandteil so innerhalb des Kunststoffs verteilt sein, dass die in dem antimikrobiellen Mittel positionierten Anschlüsse den antimikrobiellen Bestandteil oder zumindest Anteile desselben kontaktieren, um die Oberfläche beim Durchleiten des elektrischen Stromes durch das antimikrobielle Mittel aufzuheizen. Das antimikrobielle Mittel kann über die elektrischen Anschlüsse mit einer beispielsweise als Netzteil ausgebildeten Spannungsquelle gekoppelt sein.

Durch die Erwärmung des antimikrobiellen Mittels bzw. der Oberfläche wird die antimikrobielle Wirkung des antimikrobiellen Bestandteils auf der Oberfläche aktiv verstärkt. Das Anlegen der elektrischen Spannung an den Anschlüssen der Vorrichtung führt zu einem Stromfluss durch das elektrisch leitfähige antimikrobielle Mittel beziehungsweise dessen antimikrobiellen Bestandteil. Der antimikrobielle Bestandteil liegt zum Erreichen der Leitfähigkeit des antimikrobiellen Mittels und für eine möglichst gleichmäßige Erwärmung der Oberfläche zum Beispiel in Form von sich kontaktierenden Fasern und/oder Partikeln und/oder in Form eines Netzes und/oder eines Gewebes in dem antimikrobiellen Mittel vor, bevorzugt so, dass das antimikrobielle Mittel möglichst umfassend von dem elektrischen Strom durchflossen wird, besonders in den oberflächennahen Bereichen. Insbesondere eine statistisch gleichmäßige und leitfähig zusammenhängende Verteilung und/oder Verzweigung des antimikrobiellen Bestandteils ermöglicht einen gleichmäßigen Stromfluss durch das antimikrobielle Mittel und dementsprechend eine gleichmäßige Erwärmung des antimikrobiellen Mittels und damit der Oberfläche. Der elektrische Widerstand des antimikrobiellen Mittels ist für die Erwärmung der Oberfläche maßgebend. In der Praxis hat es sich gezeigt, dass die elektrische Beaufschlagung des antimikrobiellen Mittels und die dadurch erzielte Temperaturerhöhung zu einer signifikanten Verringerung der Anzahl infektiöser Viruspartikel, sogenannter Virionen, führen. Dies gilt ebenso für Pilzsporen und Bakterien. Durch die damit erreichte Entkeimung der Oberfläche werden Infektionsketten, beispielsweise infolge von Schmierinfektionen über biologische Oberflächenfilme, unterbrochen. Es wird einerseits die inhärente antimikrobielle Eigenschaft des eingesetzten antimikrobiellen Bestandteils wirksam, welche direkt zu einer Hemmung des Keimwachstums auf der Oberfläche führt, und andererseits werden die elektrische Leitfähigkeit sowie der elektrische Widerstand des antimikrobiellen Mittels genutzt, um die Oberfläche zu heizen und biologische Filme zu denaturieren und so auf aktive Weise zu einer antimikrobiellen Wirkung der Oberfläche beizutragen. Hierbei kann es in synergistischer Art und Weise je nach Material des antimikrobiellen Bestandteils zu einer temperaturabhängigen Steigerung auch dessen antimikrobieller Wirkung kommen. Die antimikrobielle Wirkung wird somit nicht nur durch die Anwesenheit des antimikrobiellen Bestandteils und die Temperaturerhöhung der Oberfläche als solche erreicht, sondern es kommt zu einer temperaturabhängigen Steigerung der antimikrobiellen Wirksamkeit des antimikrobiellen Bestandteils. Diese Vorrichtung kann somit adaptiv auf eine Verkeimung reagieren und diese beseitigen, wenn z.B. durch einen Sensor eine Verkeimung oberhalb eines maximalen Grenzwertes gemessen wird. Dieser Synergieeffekt geht über die Einzeleffekte von antimikrobieller Eigenschaft des antimikrobiellen Bestandteils und Erwärmung der Oberfläche hinaus. Insbesondere wird in jedem Fall, unabhängig von dem Synergieeffekt, nicht nur passiv durch die reine Existenz des antimikrobiellen Bestandteils eine antimikrobielle Wirkung erzielt, sondern es wird auch aktiv durch Heizen einem mikrobiellen Wachstum auf der Oberfläche entgegengewirkt.

Bevorzugt weist der antimikrobielle Bestandteil elektrisch leitfähige Partikel und/oder elektrisch leitfähige Fasern und/oder ein elektrisch leitfähiges Gewebe und/oder ein elektrisch leitfähiges Netz auf. Der antimikrobielle Bestandteil kann dabei beispielsweise nur in Form von Fasern oder nur in Form eines Gitters vorliegen oder Kombinationen insbesondere der vorgenannten Formen beinhalten. Elektrisch leitfähige Partikel und elektrisch leitfähige Fasern können in dem verwendeten Kunststoff insbesondere dispergiert werden, wobei statistisch gesehen, je nach Konzentration, dann auch ein entsprechender Anteil von elektrisch leitfähigen Partikeln und/oder elektrisch leitfähigen Fasern an der Oberfläche vorhanden ist und dort die antimikrobielle Wirkung entfaltet sowie gegebenenfalls auf der Oberfläche befindliche Keime an einem Wachstum hindert. Des Weiteren können zusätzlich oder alternativ elektrisch leitfähige Gewebe und/oder elektrisch leitfähige Netze in den Kunststoff eingebettet werden, insbesondere so, dass diese anteilig und bevorzugt gleichverteilt an der Oberfläche des Kunststoffs hervortreten und dort ihre antimikrobielle Wirkung entfalten und/oder elektrisch kontaktiert werden können. Das Hervortreten des Gewebes oder Netzes kann beispielsweise nach der Einbettung in den Kunststoff dadurch erzielt werden, dass die Oberfläche mittels eines Erosionsverfahrens bearbeitet, insbesondere lokal abgetragen, wird.

Der antimikrobielle Bestandteil kann beispielsweise ein Kohlenstoff sein. Hier kommen insbesondere Ruß und/oder Graphen zum Einsatz. Kohlenstoff kann in Form von Kohlenstoffröhrchen und/oder Geweben und/oder Nanopartikeln und/oder Puder und/oder kurzen Fasern oder in anderen Formen verwendet werden. Des Weiteren sind insbesondere Metalle geeignet, als antimikrobieller Bestandteil zu dienen. Metalle mit bekannten antimikrobiellen Eigenschaften sind insbesondere Silber, Kuper, Zink oder deren Legierungen, welche ebenso in unterschiedlichen Formen in dem Kunststoff vorliegen können, z. B. als Nanopartikel und/oder Gewebe und/oder Netz und/oder Pulver und/oder anderen.

Es wird vorgeschlagen, dass das antimikrobielle Mittel eine elektrische Leitfähigkeit in einem Bereich von 0,01 S/cm bis 10 S/cm, insbesondere in einem Bereich von 0,01 S/cm bis 1 S/cm, bevorzugt in einem Bereich von 0,01 S/cm bis 0,4 S/cm, aufweist. Diese Wertebereiche für die elektrische Leitfähigkeit haben sich in der Praxis als besonders geeignet herausgestellt, um den erfindungsgemäßen Effekt hervorzurufen. Dabei versteht es sich, dass in den genannten Wertebereichen auch Unterbereiche dieser vorteilhaft sind, beispielsweise eine elektrische Leitfähigkeit im Bereich zwischen 0,03 S/cm bis 0,08 S/cm oder einem anderen Unterbereich.

Als Kunststoff kann ein Harz, insbesondere Melaminharz, und/oder ein mit Glasfasern verstärkter Kunststoff vorgesehen sein. Kunststoffe dieser Art sind geeignet, mit antimikrobiellen Bestandteilen der vorgenannten Art vermengt zu werden, beispielsweise indem Nanopartikel und/oder Fasern in den noch flüssigen Kunststoff eingebracht werden. Es versteht sich, dass auch Fasern des antimikrobiellen Bestandteils zu einer Verstärkung des Kunststoffs führen.

Zur Entfaltung der antimikrobiellen Wirkung an der Oberfläche kann die Oberfläche des Kunststoffs bevorzugt mittels eines Erosionsverfahrens behandelt sein, indem z. B. durch Schleifen oder Sandstrahlen oder durch eine Plasmabehandlung eine oberste Schicht entfernt ist, so dass der antimikrobielle Bestandteil zumindest teilweise frei an der Oberfläche liegt. Metallisierte und/oder leitfähige Netze und/oder Gewebe können in den Kunststoff eingebettet sein, wobei diese entweder bereits beim Einbetten anteilig an der Oberfläche freiliegen und/oder nachträglich durch ein Erosionsverfahren freigelegt sind.

Gemäß einer Ausführung kann ein Metallnetz in einen glasfaserverstärkten Kunststoff integriert sein, wobei das Metallnetz durch beispielsweise Schleifen mit Sandpapier oberflächlich freigelegt ist. An das Metallnetz kann dann eine elektrische Spannungsquelle angeschlossen werden, wobei der Übergang zwischen dem Metallnetz und den elektrischen Zuleitungen der Spannungsquelle durch die elektrischen Anschlüsse bereitgestellt ist. Gemäß einer Ausführungsform können die Anschlüsse beispielsweise durch zwei oder mehr freie Endbereiche des Metallnetzes gebildet sein. Die Anschlüsse können durch übliche Verbindungstechniken wie Löten, Klemmen oder Crimpen mit Zuleitungen der Spannungsquelle verbunden werden.

Die elektrische Spannungsquelle ist bevorzugt eingerichtet, das antimikrobielle Mittel mit einer Spannung von 0,1 V bis 1,5 V oder mehr zu beaufschlagen. In Abhängigkeit von dem Widerstand des antimikrobiellen Mittels, insbesondere auch dessen Dicke bzw. Flächenwiderstand, können zur Hemmung von Keimwachstum geeignete Temperaturen an der Oberfläche erzielt werden. So können bevorzugt, insbesondere in dünnen Oberflächenschichten von einem oder mehreren Millimetern Dicke, Oberflächentemperaturen zwischen 50 °C und 70 °C erreicht werden, was ausreichend ist, um die gewünschte antimikrobielle Wirkung zu erzielen.

Es wird des Weiteren vorgeschlagen, dass das antimikrobielle Mittel in Form einer Oberflächenbeschichtung, eines Sprays, eines Lacks und/oder einer Paste auf einen Körper aufgebracht ist oder Teil eines Körpers ist. Die antimikrobielle Oberfläche kann somit auf unterschiedliche Art und Weise ausgestaltet sein. Beispielsweise kann die Oberfläche in einem ganz einfachen Fall eine oberste, nach außen weisende Schicht eines Körpers, insbesondere eines Laminats, sein. Des Weiteren ist es möglich, dass das antimikrobielle Mittel nachträglich als Oberflächenbeschichtung auf die Oberfläche eines Körpers aufgetragen wird und somit eine neue Oberfläche bildet. In dem letztgenannten Fall bedeckt die Oberflächenbeschichtung den darunterliegenden Körper zumindest teilweise. Des Weiteren kann das antimikrobielle Mittel in Form eines Sprays, eines Lacks oder einer Paste auf einen Körper aufgetragen werden. Dies bietet sich insbesondere an, wenn die antimikrobielle Wirkung später noch erneuert bzw. wiederholt werden soll. Vorteilhaft ist insbesondere, wenn das antimikrobielle Mittel mittels einer Sprayvorrichtung oder mit einem Pinsel auf einen Körper aufbringbar ist. In jedem Fall sollte die Konzentration und/oder Positionierung des antimikrobiellen Bestandteils innerhalb des antimikrobiellen Mittels so sein, dass eine elektrische Kontaktierung und Erwärmung des antimikrobiellen Mittels durch Widerstandsheizung ohne Weiteres möglich sind.

Neben der vorbeschriebenen Vorrichtung wird des Weiteren ein Verfahren zur Hemmung eines mikrobiellen Wachstums auf einer Oberfläche mit Hilfe eines antimikrobiellen Mittels vorgeschlagen, wobei das antimikrobielle Mittel einen Kunststoff aufweist, in welchem ein antimikrobieller Bestandteil eingebettet ist, wobei der antimikrobielle Bestandteil elektrisch leitfähig ist und an der Oberfläche zumindest teilweise nach außen freiliegt. Das Verfahren sieht vor, dass mit dem antimikrobiellen Bestandteil eine elektrische Leitfähigkeit des antimikrobiellen Mittels bewirkt wird und dass ein elektrischer Strom zur Erwärmung der Oberfläche durch das antimikrobielle Mittel geleitet wird. Das vorgeschlagene Verfahren wird bevorzugt unter Nutzung einer Vorrichtung der zuvor beschriebenen Art ausgeführt. Wesentlich ist, dass das antimikrobielle Mittel mit einer elektrischen Spannung beaufschlagt wird, um ein thermoelektrisches Erwärmen des antimikrobiellen Mittels zu bewirken. Bereits ein Erwärmen der Oberfläche auf Temperaturen von 50 °C oder höher führt zu einer thermischen Hemmung des mikrobiellen Wachstums auf der Oberfläche und erhöht die antimikrobielle Wirkung des antimikrobiellen Bestandteils deutlich. Dies unterstützt die ohnehin schon vorhandene passive antimikrobielle Wirkung des antimikrobiellen Bestandteils, so dass das Verfahren geeignet ist, auch große und/oder stark mit Keimen verunreinigte Oberflächen zu reinigen.

Es wird vorgeschlagen, dass das antimikrobielle Mittel, insbesondere der antimikrobielle Bestandteil, über elektrische Anschlüsse an eine elektrische Spannungsquelle angeschlossen wird. Das antimikrobielle Mittel und die elektrische Spannungsquelle können korrespondierende Anschlüsse bereitstellen, welche beispielsweise als Steckkontakte, Lötkontakte o. ä. ausgebildet sind.

Des Weiteren wird vorgeschlagen, dass mit dem antimikrobiellen Mittel eine elektrische Leitfähigkeit in einem Bereich von 0,01 S/cm bis 10 S/cm, insbesondere in einem Bereich von 0,01 S/cm bis 1 S/cm, bevorzugt in einem Bereich von 0,01 S/cm bis 0,4 S/cm, eingestellt wird. Diese Wertebereiche für die elektrische Leitfähigkeit haben sich in der Praxis als besonders geeignet herausgestellt, um den erfindungsgemäßen Effekt hervorzurufen. Dabei versteht es sich, dass in den genannten Wertebereichen auch Unterbereiche dieser vorteilhaft sind, beispielsweise eine elektrische Leitfähigkeit im Bereich zwischen 0,03 S/cm bis 0,08 S/cm oder einem anderen Unterbereich.

Die elektrische Spannungsquelle beaufschlagt das antimikrobielle Mittel, insbesondere dessen antimikrobiellen Bestandteil, beispielsweise mit einer Spannung von 0,1 V bis 1,5 V oder mehr. Hierdurch ist es in Abhängigkeit von dem Widerstand des antimikrobiellen Mittels möglich, die Oberfläche auf eine bevorzugte Temperatur von über 50 °C, insbesondere von über 60 °C, zu erwärmen.

Es wird des Weiteren vorgeschlagen, dass das antimikrobielle Mittel in Form einer Oberflächenbeschichtung, eines Sprays, eines Lacks und/oder einer Paste auf einen Körper aufgebracht wird und/oder als Teil des Körpers ausgebildet wird. Gemäß dieser Verfahrensführung ist es insbesondere möglich, Körper nachträglich mit antimikrobiellen Oberflächen auszustatten, beispielsweise indem deren Oberfläche mit einem Spray, Lack oder einer Paste beaufschlagt wird. Dies kann unter Verwendung von Sprühpistolen, Pinseln o. ä. erfolgen. Das antimikrobielle Mittel weist einen solchen Mengenanteil des antimikrobiellen Bestandteils auf, dass innerhalb der aufgetragenen Schicht eine zusammenhängende leitfähige Struktur entsteht, die bei Stromdurchführung durch Widerstandsheizung erwärmt wird. Alternativ zu einer separaten, insbesondere nachträglich aufgebrachten Oberflächenbeschichtung auf einen Körper, kann das antimikrobielle Mittel auch selbst Teil des Körpers, nämlich dessen Oberfläche, sein. In diesem Fall kann der Körper beispielsweise ein Laminat mit einer Mehrzahl von Schichten sein, wobei die oberste Schicht als antimikrobielles Mittel ausgebildet ist und dessen antimikrobieller Bestandteil zumindest teilweise nach außen freiliegt und seine Wirkung entfalten kann.

Schließlich wird vorgeschlagen, dass das antimikrobielle Mittel an seiner Oberfläche mittels eines Erosionsverfahrens zumindest teilweise abgetragen wird, um den antimikrobiellen an der Oberfläche zumindest teilweise nach außen freizulegen. Als Erosionsverfahren kann beispielsweise ein Schleifverfahren, Sandstrahlverfahren o. ä. angewendet werden. Dies dient dazu, den antimikrobiellen Bestandteil an der nach außen weisenden Fläche des Kunststoffs zumindest teilweise so freizulegen, dass dieser an der Oberfläche befindliche Keime beseitigen und/oder an einem Wachstum hindern kann. Des Weiteren kann die Abtragung zumindest eines Teils der Oberfläche auch dazu dienen, elektrische Anschlüsse zu schaffen und/oder freizulegen, über welche eine elektrische Spannungsquelle mit dem antimikrobiellen Bestandteil elektrisch koppelbar ist.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem antimikrobiellen Bestandteil die Rede ist, ist dies so zu verstehen, dass genau ein antimikrobieller Bestandteil, zwei antimikrobielle Bestandteile oder mehr antimikrobielle Bestandteile vorhanden sein können. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht einer Vorrichtung mit einem als Beschichtung eines Körpers ausgebildeten antimikrobiellen Mittel.
- **Fig. 2**: zeigt das antimikrobielle Mittel gemäß Fig. 1 in einer Detailansicht.
- **Fig. 3**: zeigt eine Draufsicht auf eine Vorrichtung mit einem antimikrobiellen Mittel gemäß einer weiteren Ausführungsform.
- **Fig. 4**: zeigt eine vergrößerte Seitenansicht des antimikrobiellen Mittels gemäß Fig. 3.

### FIGURENBESCHREIBUNG

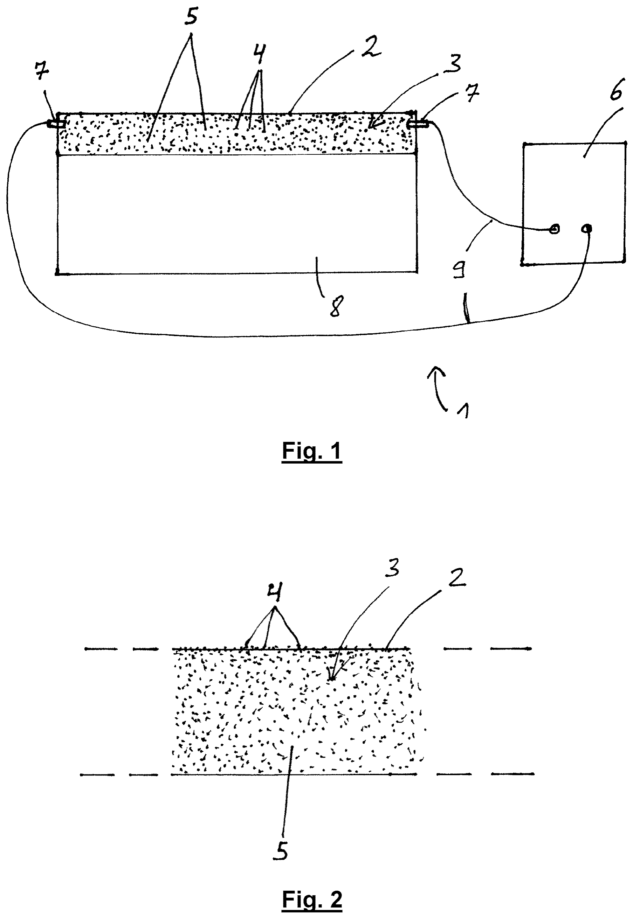

**Fig. 1** zeigt ein erstes Beispiel für eine Vorrichtung 1 mit einer Oberfläche 2 und einem antimikrobiellen Mittel 3 zur Hemmung eines mikrobiellen Wachstums auf der Oberfläche 2. Die Oberfläche 2 ist hier als Oberflächenbeschichtung eines Körpers 8 ausgebildet. Die Beschichtung kann entweder bereits beim Herstellprozess des Körpers 8 ausgebildet werden, beispielsweise bei der Herstellung eines Laminats als dessen oberste Schicht, oder nachträglich aufgetragen werden, beispielsweise durch Sprayen oder Pinseln oder Aufdrucken (3D-Druck).

Das antimikrobielle Mittel 3 weist einen antimikrobiellen Bestandteil 4 und einen Kunststoff 5 auf. Der Kunststoff 5 ist hier beispielsweise ein Melaminharz, welches mit dem antimikrobiellen Bestandteil 4 in Form von beispielsweise Kohlenstoff-Nanopartikeln versetzt ist. Alternativ können auch andere Formen von Kohlenstoff als antimikrobieller Bestandteil 4 eingebunden sein, beispielsweise Kohlenstoff in Form von Ruß und/oder Röhrchen und/oder Fasern und/oder Graphen o. a. Alternativ oder zusätzlich zu Kohlenstoff kommen des Weiteren antimikrobiell wirkende Metalle, beispielsweise in Form von Nanopartikeln und/oder Fasern, in Betracht. Geeignete Metalle sind beispielsweise Silber, Kupfer, Zink, Gold oder Osmium. Daneben sind auch Legierungen wie Messing, Bronze oder Zinn geeignet, da diese ebenfalls eine bekannte antimikrobielle Wirkung aufweisen. Die Partikel und/oder Fasern und/oder andere Formen des antimikrobiellen Bestandteils 4 sind so in den Kunststoff 5 eingebunden, dass diese eine zusammenhängende leitfähige Struktur bilden. Bevorzugt ist die Struktur innerhalb des antimikrobiellen Mittels 3 gleichverteilt. Aufgrund der elektrischen Leitfähigkeit des antimikrobiellen Bestandteils 4 ist dann auch das antimikrobielle Mittel 4 elektrisch leitfähig. Nach der Aufbringung der Oberfläche 2 auf den Körper 8 kann die nach außen weisende Seite der Oberfläche 2 vorzugsweise durch ein Erosionsverfahren, beispielsweise Schleifen, Sandstrahlen o. a. angeraut werden, um die in dem Kunststoff 5 vorhandenen antimikrobiellen Bestandteile 4 an der Oberfläche 2 freizulegen. Dadurch können die Nanopartikel des antimikrobiellen Bestandteils 4 in Kontakt mit ggf. auf der Oberfläche 2 befindlichen Keimen gelangen und diese an einem Wachstum hindern.

Alternativ ist es möglich, dass der antimikrobielle Bestandteil 4 zu einem solchen Anteil in den Kunststoff 5 eingebettet ist, dass der antimikrobielle Bestandteil 4 ohne weitere Maßnahmen in einem relevanten Maße an der Oberfläche 2 freiliegt, um in Kontakt mit etwaigen Keimen gelangen zu können, und zudem eine leitfähige zusammenhängende Struktur bildet.

Die Vorrichtung 1 weist des Weiteren elektrische Anschlüsse 7 auf, welche hier mit einer elektrischen Spannungsquelle 6, beispielsweise einem Netzteil, verbunden sind. Die elektrischen Anschlüsse 7 der Vorrichtung 1 sind gemäß der gezeigten Ausführungsform in das antimikrobielle Mittel 3 gesteckt oder eingebettet. Die elektrische Spannungsquelle 6 ist über Kabel 9 und die Anschlüsse 7 mit dem antimikrobiellen Mittel 3 verbunden.

Bei Anlegen einer elektrischen Spannung an das antimikrobielle Mittel 3 fließt ein elektrischer Strom durch das antimikrobielle Mittel 3, nämlich entlang des elektrisch leitfähigen Bestandteils 4, welcher zusammenhängend und bevorzugt gleichverteilt den Kunststoff 5 durchsetzt. Aufgrund des elektrischen Widerstands erwärmt sich der elektrisch leitfähige Bestandteil und durch Wärmeleitung das antimikrobielle Mittel 3 insgesamt, so dass die Oberfläche 2 erwärmt wird. Die Temperaturerhöhung der Oberfläche 2 bewirkt eine Verstärkung der antimikrobiellen Wirkung des an der Oberfläche 2 nach außen freiliegenden antimikrobiellen Bestandteils 4.

**Fig. 2** zeigt eine Detailansicht eines Ausschnitts der Oberfläche 2 gemäß Fig. 1. Das antimikrobielle Mittel 3 besteht aus dem Kunststoff 5, beispielsweise Melaminharz oder ein mit Glasfasern verstärkter Kunststoff, in welchem der antimikrobielle Bestandteil 4 in Form von Partikeln oder Fasern dispergiert ist. An der Oberfläche 2 liegt ein Anteil des antimikrobiellen Bestandteils 4 nach außen frei, entweder als Folge der während des Herstellungsverfahrens genutzten Partikel- und/oder Fasermenge, oder nach Anwendung eines Erosionsverfahrens, bei welchem die Partikel und/oder die Fasern an der äußersten Schicht der Oberfläche 2 freigelegt wurden. Die frei liegenden Partikel und/oder Fasern des antimikrobiellen Bestandteils 4 hindern auf der Oberfläche 2 befindliche Keime an einem Wachstum.

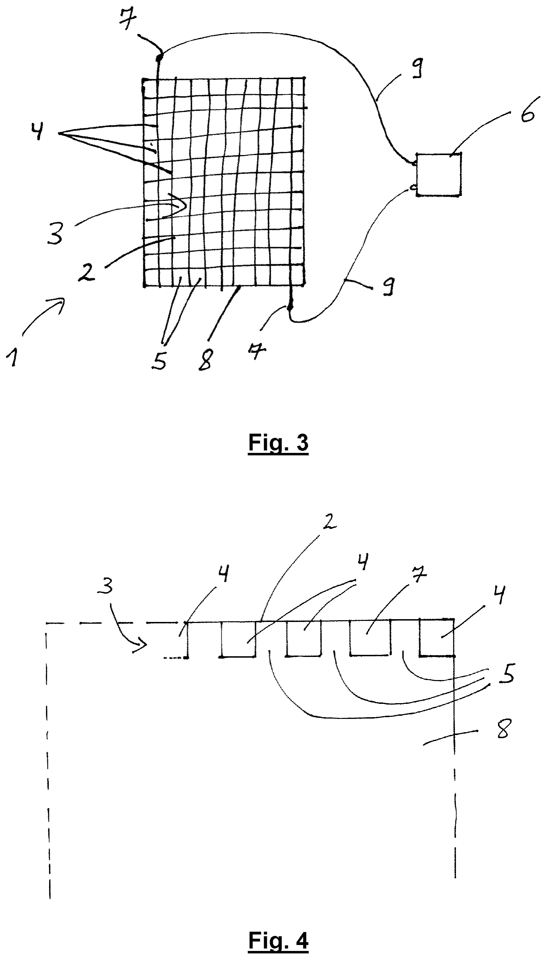

Die **Fig. 3 und 4** zeigen eine weitere Ausführungsform einer Vorrichtung 1 mit einer Oberfläche 2 und einem antimikrobiellen Mittel 3. Die Oberfläche 2 ist hier ein integraler Bereich eines Körpers 8. Die Vorrichtung 1 weist eine elektrische Spannungsquelle 6 auf, welche geeignet ist, das antimikrobielle Mittel 3 durch Anlegen einer elektrischen Spannung und damit verbundenem Stromfluss zu heizen. Der Körper 8 kann beispielsweise ein Teilbereich eines Leichtbaukörpers sein, beispielsweise eine Oberflächenverkleidung in einem Flugzeuginnenraum.

Das antimikrobielle Mittel 3 der Oberfläche 2 ist gemäß dieser Ausführungsform ein Metallnetz, hier beispielsweise ein Kupfernetz, welches in einen Kunststoff 5 des Körpers 8 eingebettet ist. Alternativ oder auch zusätzlich zu einem Netz wäre auch die Einbettung eines Gewebes, Geflechts oder eines sonstigen zusammenhängenden Gebildes aus Fasern, Drähten, Partikeln und dergleichen möglich. Der Kunststoff 5 ist hier beispielsweise ein Glasfaserkomposite, könnte jedoch ebenso ein Kunstharz sein.

Das Metallnetz, hier das Kupfernetz, ist als antimikrobieller Bestandteil 4 so in den Kunststoff 5 eingebettet, dass das Kupfernetz anteilig an der Außenseite der Oberfläche 2 freiliegt. Eine derartige Position kann bereits während des Einbettens des Kupfernetzes in den Kunststoff 5 angestrebt werden oder später durch ein teilweises Abtragen der Oberfläche 2 im Rahmen eines Erosionsverfahrens, z. B. Schleifen oder Sandstrahlen, erzielt werden. Als elektrische Anschlüsse 7 zur Verbindung des antimikrobiellen Mittels 3 mit der elektrischen Spannungsquelle 6 sind hier einzelne Drähte des Kupfernetzes aus dem Kunststoff 5 nach außen geführt, so dass diese an Kabel 9 der elektrischen Spannungsquelle 6 angeschlossen, z. B. angelötet, werden können.

In einem exemplarischen Versuchsaufbau mit einem flächigen, wenige Millimeter dicken Körper 8 aus Glasfaserkomposite und einem darin eingebetteten Kupfernetz als antimikrobiellem Bestandteil 4 wurde die Verringerung von infektiösen Viruspartikeln, so genannten Virionen, sowie Pilzsporen und Bakterien auf der geheizten Oberfläche 2 des Körpers 8 gemessen. Das Kupfernetz wurde zuvor in dem Kunststoff 5 durch Sandpapier oberflächlich freigelegt. Als elektrische Spannungsquelle 6 wurde ein Netzteil verwendet. Mittels der Spannungsquelle 6 wurde eine Spannung von 0,5 V an die Anschlüsse 7 der Vorrichtung 1 angelegt. Dabei ergab sich ein Strom von 4 A in dem Stromkreis des Versuchsaufbaus. Die Oberfläche erwärmte sich im Mittel auf ca. 60 °C. Dies führte bereits nach 60 Minuten zu einer signifikanten Reduktion der Viruspartikel auf der Oberfläche 2. Konkret konnte sogar eine LOG⁴-Reduktion nachgewiesen werden, was bedeutet, dass die Anzahl der Keime um 99,99 % reduziert wurde.

Die dargestellten Beispiele sind nur wenige mögliche Ausführungsformen aus einer Vielzahl weiterer möglicher Ausführungsformen und daher nicht beschränkend zu verstehen.

Mögliche Körper 8, auf welchen oder in welchen ein antimikrobielles Mittel 3 verwendet werden könnte, sind beispielsweise solche mit stark beanspruchten Oberflächen 2, zum Beispiel im Personenverkehr, insbesondere Bahn, Bus, Flugzeug, Taxi, Mietwagen oder anderen. Die beschriebenen Vorrichtungen 1 sind des Weiteren besonders geeignet für sterile Oberflächen 2 in Krankenhäusern und Praxisbereichen sowie öffentlichen Bereichen mit hoher Keimbelastung, wie beispielsweise Toiletten, Sanitäranlagen, Schwimmbäder, Oberflächen 2 von Geräten wie Fahrscheinautomaten u. a.

Sofern das antimikrobielle Mittel 3 nachträglich auf einen Körper 8 aufgetragen werden soll, beispielsweise als Beschichtung oder Belag, kann das antimikrobielle Mittel 3 insbesondere durch die Wahl des verwendeten Kunststoffs 5 und die Art des antimikrobiellen Bestandteils 4 so ausgebildet werden, dass es auf einen Körper 9 aufgestrichen oder aufgesprüht werden kann. Dies macht eine einfache, nachträgliche Applikation möglich, so dass Körper 8, wie beispielsweise Sitze, Arbeitsplatten, Wandelemente u. dgl. nicht ersetzt werden müssen, wenn die antimikrobielle Wirkung der Oberfläche 2 nachlässt. Insofern können antimikrobielle Oberflächen 2 auch nachgerüstet werden. Dies bietet einerseits Vorteile in ökologischer, jedoch auch in wirtschaftlicher Hinsicht.

### BEZUGSZEICHENLISTE

- 1: Vorrichtung
- 2: Oberfläche
- 3: Antimikrobielles Mittel
- 4: Antimikrobieller Bestandteil
- 5: Kunststoff
- 6: Elektrische Spannungsquelle
- 7: Elektrischer Anschluss
- 8: Körper
- 9: Kabel

## Patentansprüche

1. Vorrichtung (1) mit einer Oberfläche (2) und einem antimikrobiellen Mittel (3) zur Hemmung eines mikrobiellen Wachstums auf der Oberfläche (2), wobei das antimikrobielle Mittel (3) einen Kunststoff (5) aufweist, in den ein antimikrobieller Bestandteil (4) eingebettet ist, wobei der antimikrobielle Bestandteil (4) elektrisch leitfähig ist und an der Oberfläche (2) zumindest teilweise nach außen freiliegt, **dadurch gekennzeichnet, dass** der antimikrobielle Bestandteil (4) eine elektrische Leitfähigkeit des antimikrobiellen Mittels (3) bewirkt, wobei die Vorrichtung (1) elektrische Anschlüsse (7) aufweist, die konfiguriert sind, um einen elektrischen Strom zur Erwärmung der Oberfläche (2) durch das antimikrobielle Mittel (3) zu leiten.

2. Vorrichtung (1) nach Anspruch 1, **dadurch gekennzeichnet, dass** der antimikrobielle Bestandteil (4) elektrisch leitfähige Partikel und/oder elektrisch leitfähige Fasern und/oder ein elektrisch leitfähiges Gewebe und/oder ein elektrisch leitfähiges Netz aufweist.

3. Vorrichtung (1) nach einem der vorhergehenden Ansprüche, **dadurch gekennzeichnet, dass** der antimikrobielle Bestandteil (4) Kohlenstoff, insbesondere Ruß und/oder Graphen, und/oder ein Metall, insbesondere Silber, Kupfer und/oder Zink, aufweist.

4. Vorrichtung (1) nach einem der vorhergehenden Ansprüche, **dadurch gekennzeichnet, dass** das antimikrobielle Mittel eine elektrische Leitfähigkeit in einem Bereich von 0,01 S/cm bis 10 S/cm, insbesondere in einem Bereich von 0,01 S/cm bis 1 S/cm, bevorzugt in einem Bereich von 0,01 S/cm bis 0,4 S/cm, aufweist.

5. Vorrichtung (1) nach einem der vorhergehenden Ansprüche, **dadurch gekennzeichnet, dass** der Kunststoff (5) ein Harz, insbesondere Melaminharz, und/oder ein mit Glasfasern verstärkter Kunststoff (5) ist.

6. Vorrichtung (1) nach einem der vorhergehenden Ansprüche, **dadurch gekennzeichnet, dass** das antimikrobielle Mittel (3) in Form einer Oberflächenbeschichtung, eines Sprays, eines Lacks und/oder einer Paste auf einen Körper (8) aufgebracht ist oder Teil eines Körpers (8) ist.

7. Vorrichtung (1) nach einem der vorhergehenden Ansprüche, **gekennzeichnet durch** eine elektrische Spannungsquelle (6) zum Anlegen einer elektrischen Spannung an die Anschlüsse (7).

8. Verfahren zur Hemmung eines mikrobiellen Wachstums auf einer Oberfläche (2) mit Hilfe eines antimikrobiellen Mittels (3), welches einen Kunststoff (5) aufweist, in den ein antimikrobieller Bestandteil (4) eingebettet ist, wobei der antimikrobielle Bestandteil (4) elektrisch leitfähig ist und an der Oberfläche (2) zumindest teilweise nach außen freiliegt, **dadurch gekennzeichnet, dass** mit dem antimikrobiellen Bestandteil (4) eine elektrische Leitfähigkeit des antimikrobiellen Mittels (3) bewirkt wird und dass ein elektrischer Strom zur Erwärmung der Oberfläche (2) durch das antimikrobielle Mittel (3) geleitet wird.

9. Verfahren nach Anspruch 8, **dadurch gekennzeichnet, dass** das antimikrobielle Mittel (3), insbesondere der antimikrobielle Bestandteil (4), über elektrische Anschlüsse (7) an eine elektrische Spannungsquelle (6) angeschlossen wird.

10. Verfahren nach Anspruch 9, **dadurch gekennzeichnet, dass** mit dem antimikrobiellen Mittel eine elektrische Leitfähigkeit in einem Bereich von 0,01 S/cm bis 10 S/cm, insbesondere in einem Bereich von 0,01 S/cm bis 1 S/cm, bevorzugt in einem Bereich von 0,01 S/cm bis 0,4 S/cm, eingestellt wird.

11. Verfahren nach einem der Ansprüche 8 bis 10, **dadurch gekennzeichnet, dass** das antimikrobielle Mittel (3) in Form einer Oberflächenbeschichtung, eines Sprays, eines Lacks und/oder einer Paste auf einen Körper (8) aufgebracht wird oder als Teil eines Körpers (8) ausgebildet wird.

12. Verfahren nach einem der Ansprüche 8 bis 11, **dadurch gekennzeichnet, dass** das antimikrobielle Mittel (3) an der Oberfläche (2) mittels eines Erosionsverfahrens zumindest teilweise abgetragen wird, um den antimikrobiellen Bestandteil (4) an der Oberfläche (2) zumindest teilweise nach außen freizulegen.
